# EUROPEAN PATENT SPECIFICATION

(11) **EP 3 434 572 B1**
(45) Date of publication and mention of the grant of the patent: **18.03.2020**
(21) Application number: 17183647.1
(22) Date of filing: 27.07.2017
(51) Int. Cl.: B62K 21/16

(54) **ADJUSTABLE BICYCLE HANDLEBAR STEM ASSEMBLY**
VERSTELLBARE FAHRRADLENKERVORBAUANORDNUNG
ENSEMBLE AJUSTABLE DE POTENCE DE GUIDON DE BICYCLETTE

(43) Date of publication of application: 30.01.2019
(73) Proprietor: Kalloy Industrial Co., Ltd., Taichung City 42495 (TW)
(72) Inventor: Chen, Chao-Hu, 42945 Taichung City (TW)
(74) Representative: Cabinet Chaillot

(56) References cited:
- DE-U1- 20 306 765
- DE-U1- 20 310 498
- DE-U1- 29 603 545
- DE-U1-202004 000 012
- US-A1- 2006 099 027
- US-A1- 2007 186 716

## Description

### BACKGROUND OF THE INVENTION

### 1. Fields of the invention

The present invention relates to a handlebar stem assembly, and more particularly, to an adjustable handlebar stem assembly wherein the position of the handlebar relative the handlebar stem is secured.

### 2. Descriptions of Related Art

The conventional handlebar stem assembly has one end connected to the steering tube of the front fork, and the other end of the handlebar stem assembly is connected with the handlebar. One of the adjustable handlebar stem assembly known to applicant is able to adjust the angular position of the handlebar relative to the handlebar stem. However, the handlebar stem assembly does not have a proper securing mechanism to maintain the handlebar at the adjusted position, so that when the handlebar and the handlebar stem receive severe vibration, the handlebar may be loosened and cause dangerous results to the riders.

U.S. 2007/186716 A1 to Chen discloses an angle adjusting assembly of a stand tube, wherein the handlebar stem assembly includes a vertical tube that is to be connected to a bicycle head tube. A stem includes a clamping portion on one end thereof so as to clamp a handlebar. The vertical tube comprises a head which has a toothed face. The stem comprises two plates extending from the clamping portion. The two plates are pivotably connected on two ends of the head. A pawl member is pivotably located between the two plates by a pin that extends through the two plates and the mediate portion of the pawl member. The pawl member comprises a press end and an engaging portion respectively on two ends thereof. The engaging portion has teeth which are engageable with the toothed face.

However, the lever of the quick-release is exposed on the top of the stem and does not have a proper locking means to prevent the lever from being pivoted upward or downward accidentally.

The present invention intends to provide an adjustable handlebar stem assembly which includes a quick-release and a pawl member which is engaged with toothed face on the vertical tube of the handlebar stem assembly to ensure that the handlebar is secured and safe. Furthermore, the lever of the quick-release is well protected from being pivoted accidentally.

### SUMMARY OF THE INVENTION

The present invention relates to an adjustable handlebar stem assembly which comprises a vertical tube adapted to extend through a bicycle head tube and a stem having a clamping portion on one end thereof and the clamping portion adapted to clamp a handlebar. The vertical tube comprises a head which has a toothed face. The stem comprises two plates extending from the clamping portion. The two plates are pivotably connected on two ends of the head. A pawl member is pivotably located between the two plates by extending a pin through the two plates and a mediate portion of the pawl member. The pawl member comprises a press end and an engaging portion respectively on two ends thereof. The engaging portion has teeth which are engageable with the toothed face. A restriction rod is located above the pawl member and has a first end thereof extending through one of the two plates. A restriction member is connected to the first end of the restriction rod that is located between the two plates. A quick-release comprises a lever which includes a restriction portion extending from the underside thereof. The restriction portion includes a recess which faces the restriction rod. Two lugs extend from the first end of the lever and each have a curved outer periphery which is pivotably in contact with the press end of the pawl member. Each of the two lugs has an eccentric hole and a pivot extends through the two lugs. A bolt has the first end thereof extending from the underside of the stem and is threadedly connected to a threaded hole of the pivot. The second end of the bolt is connected to the stem. The lever of the quick-release is pivotably located between the two plates. When the lever of the quick-release is pivoted downward and located between the two plates and when the restriction rod is not pushed inward, the restriction member is engaged with the recess of the restriction portion of the lever, thereby restricting the lever of the quick-release to be pivoted. The pawl member is pivoted relative to the pin and the engaging portion is engaged with the toothed face of the vertical tube.

Preferably, the press end of the pawl member includes a curved and recessed face through which a bore is defined. The bolt extends through the bore. The two lugs are pivotably in contact with the curved and recessed face.

Preferably, the stem includes an extension which is located beneath the pawl member. The bolt is connected to a nut which contacts against the extension.

Preferably, a sleeve is mounted to the restriction rod and a portion of the sleeve extends through the plate through which the restriction rod extends. A spring is mounted to the restriction rod and biased between the restriction rod and the sleeve.

Preferably, the restriction rod includes a diameter-reduced section so as to form a shoulder. The sleeve includes a flange extending inward from one open end thereof. The spring is mounted to the diameter-reduced section and biased between the shoulder and the flange.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the adjustable handlebar stem assembly of the present invention;
Fig. 2 is an exploded view of the adjustable handlebar stem assembly of the present invention;
Fig. 3 is an exploded view of the quick-release and the restriction rod of the adjustable handlebar stem assembly of the present invention;
Fig. 4 is a cross sectional view to show that the lever of the quick-release is pivoted upward;
Fig. 5 is a cross sectional view to show that the lever of the quick-release is pivoted downward;
Fig. 6 is a cross sectional view to show that the restriction rod is not yet pushed inward relative to the stem;
Fig. 7 is a cross sectional view to show that the restriction rod is pushed inward relative to the stem, and
Fig. 8 is a cross sectional view to show that the lever of the quick-release is pivoted upward, and the stem is adjusted relative to the vertical tube.

### DETAILED DESCRIPTION OF THE PREFERRED EMBODIMENT

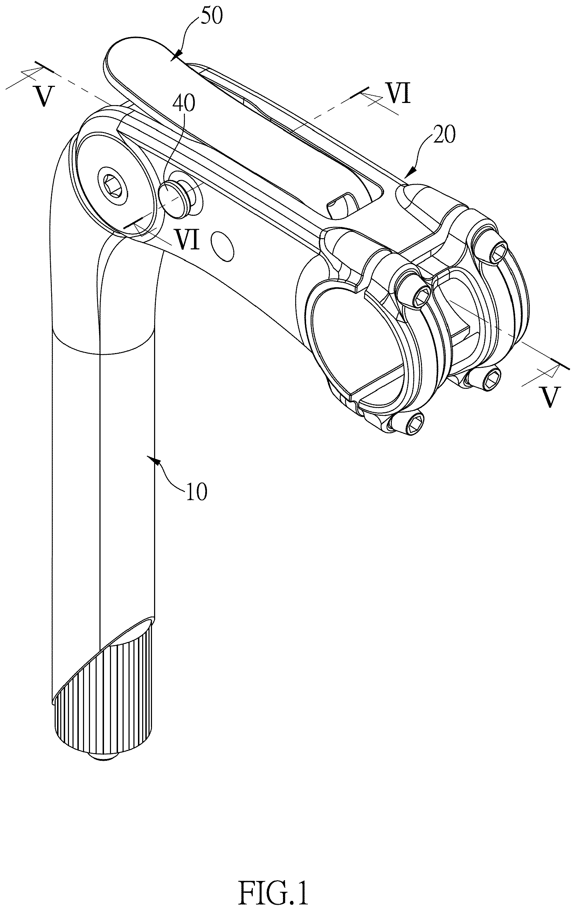

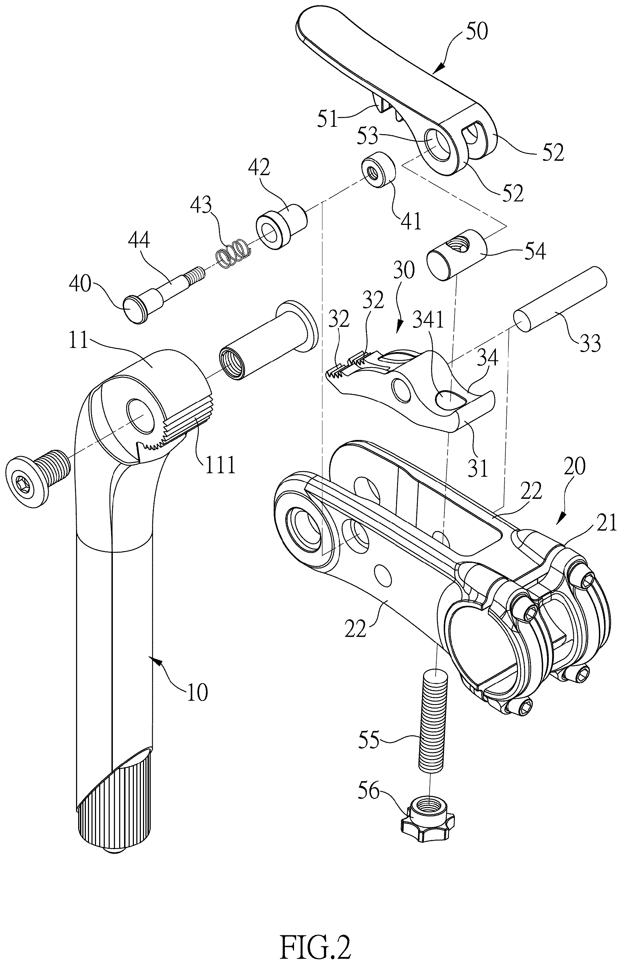

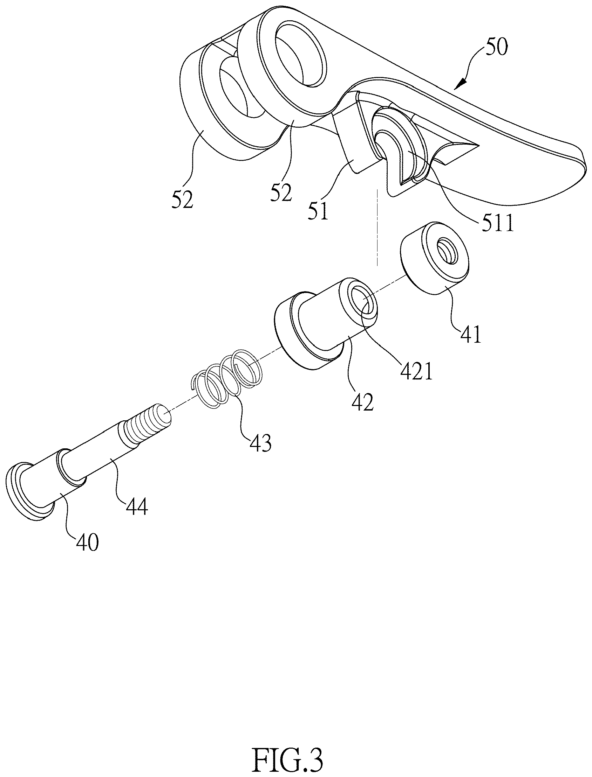

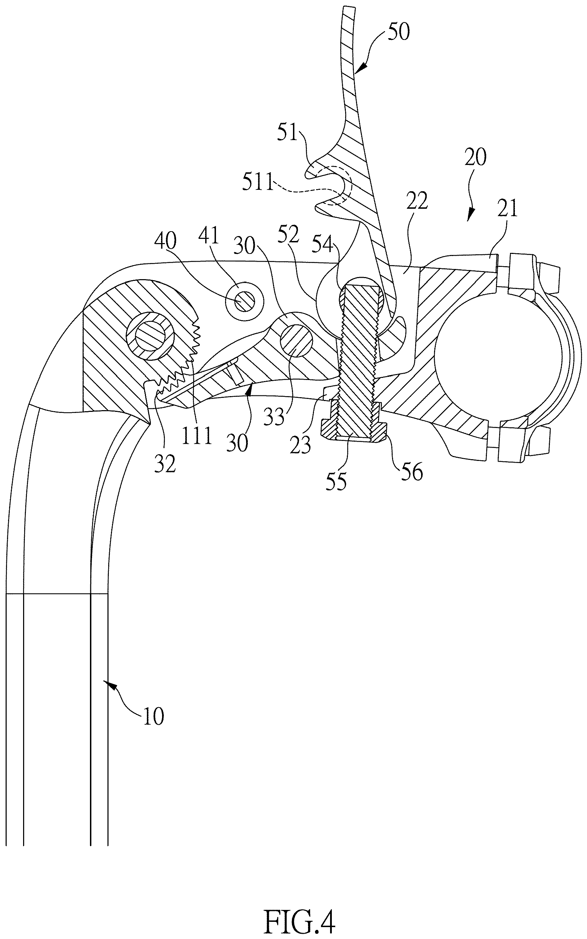

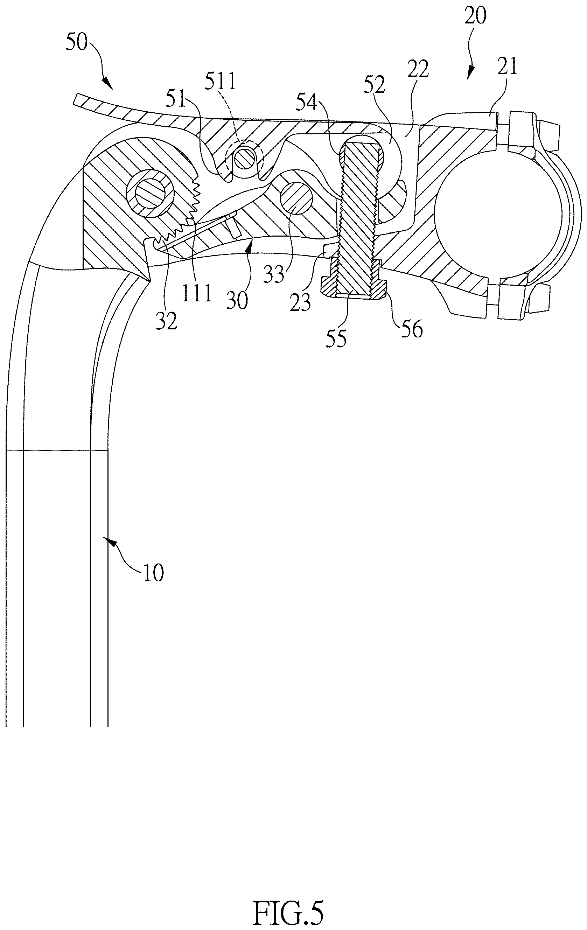

Referring to Figs. 1 to 5, the adjustable handlebar stem assembly of the present invention comprises a vertical tube 10 and a stem 20, wherein the vertical tube 10 extends through a bicycle head tube, and the stem 20 has a clamping portion 21 on one end thereof so as to clamp a handlebar. The vertical tube 10 comprises a head 11 which has a toothed face 111. The stem 20 comprises two plates 22 extending from the clamping portion 21. The two plates 22 are pivotably connected on two ends of the head 11.

A pawl member 30 is pivotably located between the two plates 22 by extending a pin 33 through the two plates 22 and a mediate portion of the pawl member 30. The pawl member 30 comprises a press end 31 and an engaging portion 32 respectively on two ends thereof. The press end 31 of the pawl member 30 includes a curved and recessed face 34 through which a bore 341 is defined. The engaging portion 32 has teeth which are engageable with the toothed face 111.

A restriction rod 40 is located above the pawl member 30 and has the first end thereof extending through one of the two plates 22. A restriction member 41 is connected to the first end of the restriction rod 40 that is located between the two plates 22.

A quick-release 50 comprises a lever which includes a restriction portion 51 extending from the underside thereof. The restriction portion 51 includes a recess 511 which faces the restriction rod 40. Two lugs 52 extend from the first end of the lever and each have a curved outer periphery which is pivotably in contact with the curved and recessed face 34 of the press end 31 of the pawl member 30. Each of the two lugs 52 has an eccentric hole 53 and a pivot 54 extends through the two lugs 52.

A bolt 55 has a first end thereof extending through the bore 341 from the underside of the stem 20 and is threadedly connected to a threaded hole of the pivot 54. The second end of the bolt 55 is connected to the stem 20. Specifically, the stem 20 includes an extension 23 which is located beneath the pawl member 30. The bolt 55 is connected to a nut 56 which contacts against the extension 23. The lever of the quick-release 50 is pivotably located between the two plates 22. The restriction member 41 can be engaged with the recess 511 of the restriction portion 51 of the lever when the lever is pivoted downward and located between the two plates 22. It is understandable that the pawl member 30 is pivotably relative to the pin 33 and engaging portion 32 is engaged with the toothed face 111 of the vertical tube 10. In other words, the restriction member 41 restricts the lever of the quick-release 50 to be pivoted when the lever of the quick-release 50 is pivoted downward and located between the two plates 22 and when the restriction rod 40 is not pushed inward, the restriction member 41 is engaged with the recess 511 of the restriction portion 51, thereby restricting the lever of the quick-release 50 to be pivoted.

A sleeve 42 is mounted to the restriction rod 40 and a portion of the sleeve 42 extends through the plate 22 through which the restriction rod 40 extends. A spring 43 is mounted to the restriction rod 40 and biased between the restriction rod 40 and the sleeve 42. Specifically, the restriction rod 40 includes a diameter-reduced section 44 so as to form a shoulder. The sleeve 42 includes a flange 421 extending inward from one open end thereof. The spring 43 is mounted to the diameter-reduced section 44 and biased between the shoulder and the flange 421.

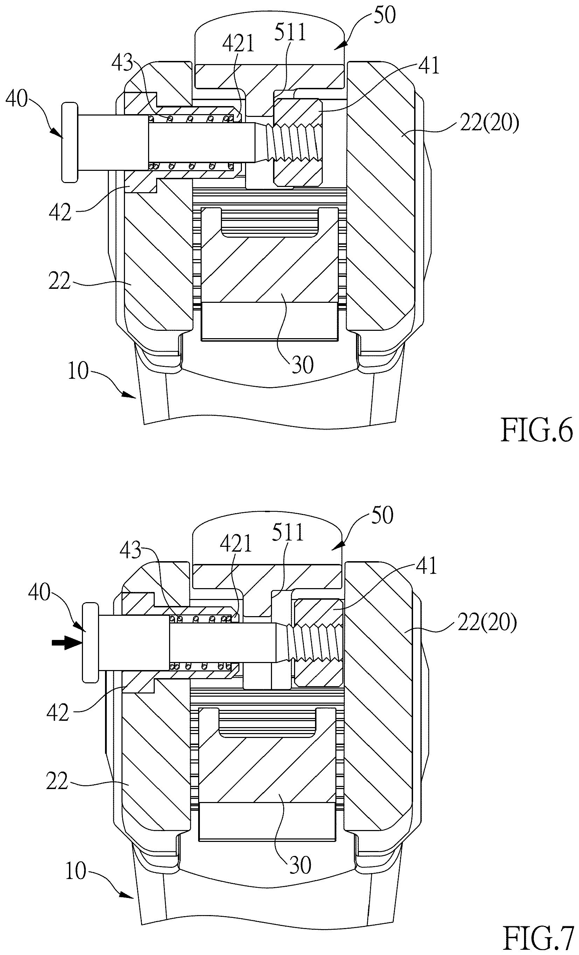

Because the lugs 52 of the quick-release 50 each have the eccentric hole 53, so that when the lever is pivoted downward, the bolt 55 is lifted upward to securely press the lugs 52 on the curved and recessed face 34, and the pawl member 30 is pivoted to firmly engage the engaging portion 32 of the pawl member 30 with the toothed face 111 of the head 11 of the vertical tube 10. Therefore, the stem 20 is securely positioned relative to the vertical tube 10. In the meanwhile, as shown in Fig. 6, the restriction member 41 is engaged with the recess 511 of the restriction portion 51 of the lever, and the spring 43 pulls the restriction rod 40 to securely engage the restriction member 41 with the recess 511 of the restriction portion 51 of the lever. The recess 511 is shaped to have a smaller opening at the lower end thereof so that the lever cannot be pivoted upward because the restriction member 41 cannot pass through the smaller opening at the lower end of the recess 511. The restriction member 41 can be removed from the recess 511 of the restriction portion 51 of the lever by pushing the restriction rod 40.

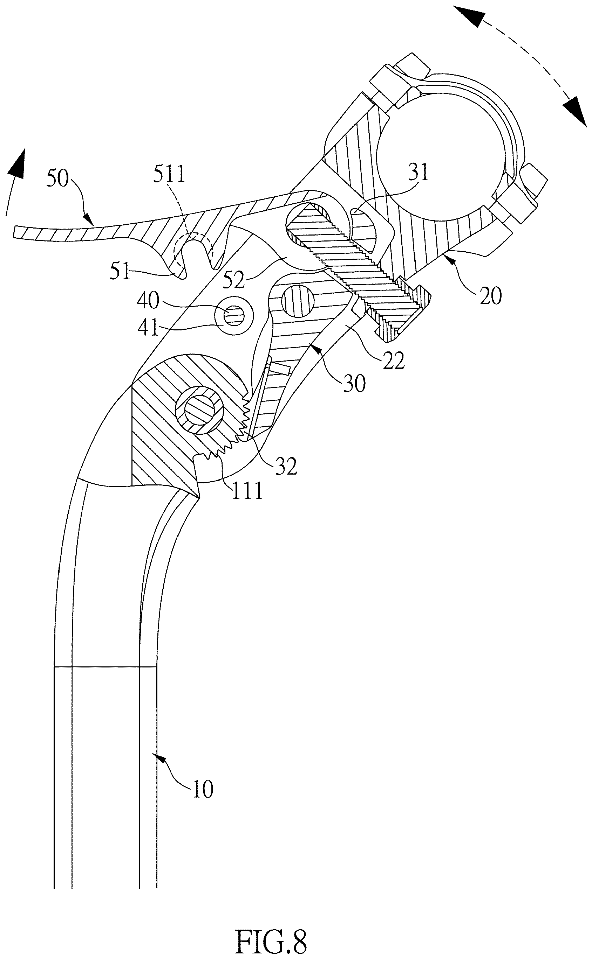

As shown in Fig. 7, when the restriction rod 40 is pushed inward, the restriction member 41 is disengaged from the recess 511 of the restriction portion 51 of the lever, and the lever can be pivoted upward to loosen the bolt 55. The engaging portion 32 of the pawl member 30 is no longer firmly engaged with the toothed face 111 of the vertical tube 10, and stem 20 can be pivoted an angle relative to the vertical tube 10 as shown in Fig. 8. When the desired position of the stem 20 is set, the lever of the quick-release is pushed downward again to firmly engage the engaging portion 32 of the pawl member 30 with the toothed face 111 of the vertical tube 10.

While we have shown and described the embodiment in accordance with the present invention, it should be clear to those skilled in the art that further embodiments may be made without departing from the scope of the present invention.

## Claims

1. An adjustable handlebar stem assembly comprising a vertical tube (10) adapted to extend through a bicycle head tube, a stem (20) having a clamping portion (21) on one end thereof and the clamping portion (21) adapted to clamp a handlebar, wherein
the vertical tube (10) comprises a head (11) which has a toothed face (111);
the stem (20) comprises two plates (22) extending from the clamping portion (21), the two plates (22) being pivotably connected on two ends of the head (11);
a pawl member (30) is pivotably located between the two plates (22) by extending a pin (33) through the two plates (22) and a mediate portion of the pawl member (30), the pawl member (30) comprises a press end (31) and an engaging portion (32) respectively on two ends thereof, the engaging portion (32) has teeth which are engageable with the toothed face (111);
**characterized in that**
a restriction rod (40) is located above the pawl member (30) and has a first end thereof extending through one of the two plates (22), a restriction member (41) is connected to the first end of the restriction rod (40) that is located between the two plates (22), and
a quick-release (50) comprises a lever which includes a restriction portion (51) extending from an underside thereof, the restriction portion (51) includes a recess (511) which faces the restriction rod (40), two lugs (52) extend from a first end of the lever and each have a curved outer periphery which is pivotably in contact with the press end (31) of the pawl member (30), each of the two lugs (52) has an eccentric hole (53) and a pivot (54) extends through the two lugs (52), a bolt (55) has a first end thereof extending from an underside of the stem (20) and is threadedly connected to a threaded hole of the pivot (54), a second end of the bolt (55) is connected to the stem (20), the lever of the quick-release (50) is pivotably located between the two plates (22),
wherein when the lever of the quick-release (50) is pivoted downward and located between the two plates (22) and when the restriction rod (40) is not pushed inward, the restriction member (41) is engaged with the recess (511) of the restriction portion (51) of the lever, thereby restricting the lever of the quick-release (50) to be pivoted, the pawl member (30) is pivoted relative to the pin (33) and the engaging portion (32) is engaged with the toothed face (111) of the vertical tube (10).

2. The adjustable handlebar stem assembly as claimed in claim 1, wherein the press end (31) of the pawl member (30) includes a curved and recessed face (34) through which a bore (341) is defined, the bolt (55) extends through the bore (341), the two lugs (52) are pivotably in contact with the curved and recessed face (34).

3. The adjustable handlebar stem assembly as claimed in claim 1 or in claim 2, wherein the stem (20) includes an extension (23) which is located beneath the pawl member (30), the bolt (55) is connected to a nut (56) which contacts against the extension (23).

4. The adjustable handlebar stem assembly as claimed in claim 1, wherein a sleeve (42) is mounted to the restriction rod (40) and a portion of the sleeve (42) extends through the plate (22) through which the restriction rod (40) extends, a spring (43) is mounted to the restriction rod (40) and biased between the restriction rod (40) and the sleeve (42).

5. The adjustable handlebar stem assembly as claimed in claim 4, wherein the restriction rod (40) includes a diameter-reduced section (44) so as to form a shoulder, the sleeve (42) includes a flange (421) extending inward from one open end thereof, the spring (43) is mounted to the diameter-reduced section (44) and biased between the shoulder and the flange (421).

## Patentansprüche

1. Justierbare Lenkervorbauanordnung, umfassend ein vertikales Rohr (10), das dafür eingerichtet ist, sich durch ein Fahrrad-Steuerrohr zu erstrecken, einen Vorbau (20) mit einem Spannabschnitt (21) an seinem einen Ende und wobei der Spannabschnitt (21) dafür eingerichtet ist, einen Lenker einzuspannen, wobei
das vertikale Rohr (10) einen Kopf (11) umfasst, der eine gezahnte Fläche (111) aufweist,
der Vorbau (20) zwei Platten (22) umfasst, die sich von dem Spannabschnitt (21) aus erstrecken, wobei die zwei Platten (22) schwenkbar mit zwei Enden des Kopfs (11) verbunden sind,
ein Sperrelement (30) schwenkbar zwischen den zwei Platten (22) angeordnet ist, indem sich ein Stift (33) durch die zwei Platten (22) und einen Mittelabschnitt des Sperrelements (30) erstreckt, wobei das Sperrelement (30) an seinen zwei Enden ein Drückende (31) beziehungsweise einen Eingriffsabschnitt (32) umfasst, wobei der Eingriffsabschnitt (32) Zähne aufweist, die mit der gezahnten Fläche (111) in Eingriff gebracht werden können,
**dadurch gekennzeichnet, dass**
über dem Sperrelement (30) eine Beschränkungsstange (40) angeordnet ist, deren erstes Ende sich durch eine der zwei Platten (22) erstreckt, mit dem ersten Ende der Beschränkungsstange (40) ein Beschränkungselement (41) verbunden ist, das zwischen den zwei Platten (22) angeordnet ist, und
ein Schnellspanner (50) einen Hebel umfasst, der einen Beschränkungsabschnitt (51) umfasst, der sich von dessen Unterseite aus erstreckt, der Beschränkungsabschnitt (51) eine Vertiefung (511) beinhaltet, die zur Beschränkungsstange (40) weist, sich zwei Laschen (52) von einem ersten Ende des Hebels aus erstrecken und jeweils einen gekrümmten Außenumfang aufweisen, der schwenkbar in Kontakt mit dem Drückende (31) des Sperrelements (30) steht, jede der zwei Laschen (52) eine exzentrische Öffnung (53) aufweist und sich ein Zapfen (54) durch die zwei Laschen (52) erstreckt, ein Bolzen (55) ein erstes Ende aufweist, das sich von einer Unterseite des Vorbaus (20) aus erstreckt und mittels Gewinde mit einer mit Gewinde versehenen Öffnung des Zapfens (54) verbunden ist, ein zweites Ende des Bolzens (55) mit dem Vorbau (20) verbunden ist, der Hebel des Schnellspanners (50) schwenkbar zwischen den zwei Platten (22) angeordnet ist,
wobei das Beschränkungselement (41), wenn der Hebel des Schnellspanners (50) nach unten geschwenkt und zwischen den zwei Platten (22) angeordnet wird, und wenn die Beschränkungsstange (40) nicht nach innen gedrückt wird, mit der Vertiefung (511) des Beschränkungsabschnitts (51) des Hebels in Eingriff gelangt, wodurch das Schwenken des Hebels des Schnellspanners (50) beschränkt wird, das Sperrelement (30) im Verhältnis zum Stift (33) geschwenkt wird und der Eingriffsabschnitt (32) mit der gezahnten Fläche (111) des vertikalen Rohrs (10) in Eingriff gelangt.

2. Justierbare Lenkervorbauanordnung nach Anspruch 1, wobei das Drückende (31) des Sperrelements (30) eine gekrümmte und vertiefte Fläche (34) beinhaltet, durch die eine Bohrung (341) definiert ist, sich der Bolzen (55) durch die Bohrung (341) erstreckt, die zwei Laschen (52) schwenkbar in Kontakt mit der gekrümmten und vertieften Fläche (34) stehen.

3. Justierbare Lenkervorbauanordnung nach Anspruch 1 oder Anspruch 2, wobei der Vorbau (20) eine Erweiterung (23) beinhaltet, die unter dem Sperrelement (30) angeordnet ist, der Bolzen (55) mit einer Mutter (56) verbunden ist, die an der Erweiterung (23) anliegt.

4. Justierbare Lenkervorbauanordnung nach Anspruch 1, wobei an die Beschränkungsstange (40) eine Hülse (42) montiert ist und sich ein Abschnitt der Hülse (42) durch die Platte (22) erstreckt, durch die sich die Beschränkungsstange (40) erstreckt, an die Beschränkungsstange (40) eine Feder (43) montiert und zwischen der Beschränkungsstange (40) und der Hülse (42) vorgespannt ist.

5. Justierbare Lenkervorbauanordnung nach Anspruch 4, wobei die Beschränkungsstange (40) einen im Durchmesser verminderten Teilabschnitt (44) beinhaltet, so dass ein Absatz gebildet ist, wobei die Hülse (42) einen Flansch (421) beinhaltet, der sich von ihrem offenen Ende einwärts erstreckt, wobei die Feder (43) an den im Durchmesser verminderten Teilabschnitt (44) montiert und zwischen dem Absatz und dem Flansch (421) vorgespannt ist.

## Revendications

1. Ensemble potence de guidon ajustable comprenant un tube vertical (10) apte à s'étendre à travers un tube de direction de bicyclette, une potence (20) ayant une partie de serrage (21) sur une extrémité de celle-ci et la partie de serrage (21) étant apte à serrer un guidon,
le tube vertical (10) comprenant une tête (11) qui a une face dentée (111) ;
la potence (20) comprenant deux plaques (22) s'étendant à partir de la partie de serrage (21), les deux plaques (22) étant reliées de manière pivotante sur deux extrémités de la tête (11) ;
un élément cliquet (30) étant situé de manière pivotante entre les deux plaques (22) par extension d'un axe (33) à travers les deux plaques (22) et une partie médiane de l'élément cliquet (30), l'élément cliquet (30) comprenant une extrémité de pression (31) et une partie d'engagement (32) respectivement sur deux extrémités de celui-ci, la partie d'engagement (32) ayant des dents qui sont aptes à s'engager avec la face dentée (111) ;
**caractérisé par le fait que**
une tige de limitation (40) est située au-dessus de l'élément cliquet (30) et a une première extrémité de celle-ci s'étendant à travers l'une des deux plaques (22), un élément de limitation (41) est relié à la première extrémité de la tige de limitation (40) qui est située entre les deux plaques (22), et
un levier de blocage rapide (50) comprend un levier qui comprend une partie de limitation (51) s'étendant à partir d'un côté inférieur de celui-ci, la partie de limitation (51) comprend un évidement (511) qui fait face à la tige de limitation (40), deux oreilles (52) s'étendent à partir d'une première extrémité du levier et ont chacune une périphérie externe courbe qui est en contact de manière pivotante avec l'extrémité de pression (31) de l'élément cliquet (30), chacune des deux oreilles (52) a un trou excentrique (53) et un pivot (54) s'étend à travers les deux oreilles (52), un boulon (55) a une première extrémité de celui-ci s'étendant à partir d'un côté inférieur de la potence (20) et est relié par vissage à un trou fileté du pivot (54), une seconde extrémité du boulon (55) est reliée à la potence (20), le levier du levier de blocage rapide (50) est situé de manière pivotante entre les deux plaques (22),
dans lequel, lorsque le levier du levier de blocage rapide (50) est amené à pivoter vers le bas et situé entre les deux plaques (22) et lorsque la tige de limitation (40) n'est pas poussée vers l'intérieur, l'élément de limitation (41) est engagé avec l'évidement (511) de la partie de limitation (51) du levier, limitant ainsi le pivotement du levier du levier de blocage rapide (50), l'élément cliquet (30) étant amené à pivoter par rapport à l'axe (33) et la partie d'engagement (32) étant engagée avec la face dentée (111) du tube vertical (10).

2. Ensemble potence de guidon ajustable selon la revendication 1, dans lequel l'extrémité de pression (31) de l'élément cliquet (30) comprend une face courbe et renfoncée (34) à travers laquelle un alésage (341) est défini, le boulon (55) s'étend à travers l'alésage (341), les deux oreilles (52) sont en contact de manière pivotante avec la face courbe et renfoncée (34).

3. Ensemble potence de guidon ajustable selon la revendication 1 ou la revendication 2, dans lequel la potence (20) comprend une extension (23) qui est située sous l'élément cliquet (30), le boulon (55) est relié à un écrou (56) qui est en contact contre l'extension (23).

4. Ensemble potence de guidon ajustable selon la revendication 1, dans lequel un manchon (42) est monté sur la tige de limitation (40) et une partie du manchon (42) s'étend à travers la plaque (22) à travers laquelle la tige de limitation (40) s'étend, un ressort (43) est monté sur la tige de limitation (40) et sollicité entre la tige de limitation (40) et le manchon (42).

5. Ensemble potence de guidon ajustable selon la revendication 4, dans lequel la tige de limitation (40) comprend une section à diamètre réduit (44) de façon à former un épaulement, le manchon (42) comprend une bride (421) s'étendant vers l'intérieur à partir d'une extrémité ouverte de celui-ci, le ressort (43) est monté sur la section à diamètre réduit (44) et sollicité entre l'épaulement et la bride (421).
